# EUROPÄISCHE PATENTSCHRIFT

(11) **EP 1 541 934 B1**
(45) Veröffentlichungstag und Bekanntmachung des Hinweises auf die Patenterteilung: **26.07.2006**
(21) Anmeldenummer: 03028051.5
(22) Anmeldetag: 08.12.2003
(51) Int. Cl.: F24F 13/068, F24F 7/10, F24F 1/00

(54) **Kühlelement sowie Kühleinrichtung und Verfahren zu ihrem Betrieb**
Cooling element, cooling device and operating method therefor
Elément de refroidissement, dispositif de refroidissement et son procédé d'operation

(43) Veröffentlichungstag der Anmeldung: 15.06.2005
(73) Patentinhaber: BARCOL-AIR AG, 8712 Stäfa (CH)
(72) Erfinder: Sokolean, Helmuth, 8712 Uerikon (CH)
(74) Vertreter: Wagner, Wolfgang Heribert

(56) Entgegenhaltungen:
- EP-A- 0 488 977
- EP-A- 0 552 690
- DE-A- 2 138 667
- DE-A- 10 043 968
- US-B1- 6 602 129

## Beschreibung

### Technisches Gebiet

Die Erfindung betrifft ein Kühlelement gemäss dem Oberbegriff des Anspruchs 1, wie sie zum Kühlen oder allgemeiner zum Klimatisieren von Räumen, besonders von Büroräumen u.ä. eingesetzt werden sowie eine Kühleinrichtung, die ein solches Kühlelement umfasst und ein Verfahren zu ihrem Betrieb.

### Stand der Technik

Aus der WO-A-00/52 395 ist ein gattungsgemässes Kühlelement bekannt, welches durch eine luftdurchlässige Wand an seiner Unterseite Kühlluft abgibt, die nach unten in den zu kühlenden Raum fliesst. Die auf diese Weise erzielbare Kühlwirkung ist jedoch insbesondere in Büros nicht immer ausreichend, da der Kühlbedarf wegen vieler Wärme abgebender Geräte oft sehr hoch ist. Der momentane Kühlbedarf kann dann während der Arbeitszeit so gross werden, dass er mit dem bekannten gattungsgemässen Kühlelement allein nur schwer zu decken ist, vor allem, wenn auch andere Randbedingungen wie geringe Luftströmungen, eine homogene Temperaturverteilung und ein niedriger Geräuschpegel eingehalten werden sollen.

Kühlelemente können durch separate Vorrichtungen zur Betonkernkühlung ergänzt werden, doch bedeutet dies einen hohen zusätzlichen Aufwand, da dazu Rohre in der Decke verlegt und einbetoniert werden müssen. Dies kann eigentlich nur bei Erstellung des Baus geschehen, ein nachträgliches Verlegen von Rohren für die Betonkernkühlung ist so gut wie ausgeschlossen. Ausserdem können die Folgen momentaner Wärmebelastungsspitzen auf diese Weise zwar gemildert, aber nicht abgefangen werden.

Der EP-A-0 552 690 ist ein Kühlelement entnehmbar, welches eine unterhalb der Raumdecke angeordnete, dieselbe ganz verdeckende Kammer bildet, welche an der Unterseite von einer luftdurchlässigen Wand und an der Oberseite von einer Decke verschlossen ist und mit einem oberhalb der Kammer angeordneten Zuluftkanal in Verbindung steht. Die Leitungen sind auf der Oberseite der luftdurchlässigen Wand angeordnet, während an der Unterseite der Decke der Kammer eine Wärmedämmschicht angebracht ist. Die zugeführte Luft ist vorgetrocknet, damit an den Leitungen keine Kondensation auftritt. Die Kühlung wird durch die Kühlflüssigkeit führenden Leitungen bewirkt. Die Luft kühlt sich an ihnen und an der von ihnen gekühlten luftdurchlässigen Wand ab. Es ist fraglich, ob so bei ausreichender Frischluftzufuhr gleichzeitig eine ausreichende Kühlleistung gewährleistet werden kann. Das Kühlelement ist auch nicht geeignet, durch engeren thermischen Kontakt mit der Raumdecke die Wärmespeicherfähigkeit derselben auszunützen.

DE-A-21 38 667 sind unterhalb der Raumdecke parallel aufgehängte Heizelemente, die wo nötig auch als Kühlelemente eingesetzt werden können, zu entnehmen, deren jedes eine sich jeweils über die ganze Länge des Raumes erstreckende Kammer bildet, mit einer Decke, an der Frischluftleitungen münden und mit einem Boden, auf welchem hin- und zurücklaufende Leitungen für Heiz- oder auch Kühlflüssigkeit angebracht sind und der durch mehrere kleinere Luftauslässe durchbrochen ist, aus denen Frischluft ausströmt. Die Elemente sind nicht geeignet, grössere Mengen Kühlluft zuzuführen, ohne dass störende kompakte Strömungen entstünden. Ebensowenig sind sie geeignet, die Speicherfähigkeit der Raumdecke auszunützen.

### Darstellung der Erfindung

Der Erfindung liegt die Aufgabe zu Grunde, ein gattungsgemässes Kühlelement für eine Kühleinrichtung so weiterzubilden, dass es geeignet ist, auch bei hohen Wärmebelastungen eine ausreichende Kühlwirkung zu gewährleisten, ohne dass eine wesentlich über dem durch den Frischluftbedarf Gebotenen liegende Zufuhr von Kühlluft erforderlich wäre. Ausserdem soll es erlauben, ohne weitere Vorkehrungen die Wärmespeicherfähigkeit der Raumdecke auf kostengünstige Weise auszunützen.

Das erfindungsgemässe Kühlelement erlaubt den Aufbau einer Kühleinrichtung, mit der Spitzen der Wärmebelastung ohne Erhöhung der Kühlluftzufuhr bewältigt werden können. Ausserdem kann die Speicherfähigkeit der Raumdecke in einfachster Weise zur Ergänzung der Kühlwirkung genutzt werden. Dadurch liegen die Spitzenwerte des momentanen Kühlbedarfs, der vom Kühlelement gedeckt werden muss, deutlich tiefer als dies sonst der Fall wäre.

Bei einer besonderen Ausbildung des erfindungsgemässen Kühlelements kann die Kühleinrichtung bei Bedarf auch mindestens partiell zur Raumheizung eingesetzt werden. Auch bei dieser Betriebsweise kann die Speicherfähigkeit des Betons genutzt werden.

### Kurze Beschreibung der Zeichnungen

Im folgenden wird die Erfindung anhand von Figuren, welche lediglich Ausführungsbeispiele darstellen, näher erläutert. Es zeigen
- Fig. 1: eine Unteransicht eines erfindungsgemässen Kühlelements gemäss einer ersten Ausführungsform, wobei eine luftdurchlässige Wand an der Unterseite weggelassen ist,
- Fig. 2a: einen Querschnitt durch das Kühlelement nach Fig. 1 längs II-II,
- Fig. 2b: einen gleichartigen Querschnitt durch ein Kühlelement gemäss einer geringfügig abweichenden zweiten Ausführungssform,
- Fig. 3: einen Ausschnitt III aus Fig. 2a,
- Fig. 4a: schematisch eine erfindungsgemässe Kühleinrichtung gemäss einer ersten Ausführungsform,
- Fig. 4b: schematisch eine erfindungsgemässe Kühleinrichtung gemäss einer zweiten Ausführungsform und
- Fig. 5: ein Diagramm, welches ein erfindungsgemässes Verfahren zum Betrieb einer erfindungsgemässen Kühleinrichtung veranschaulicht.

### Wege zur Ausführung der Erfindung

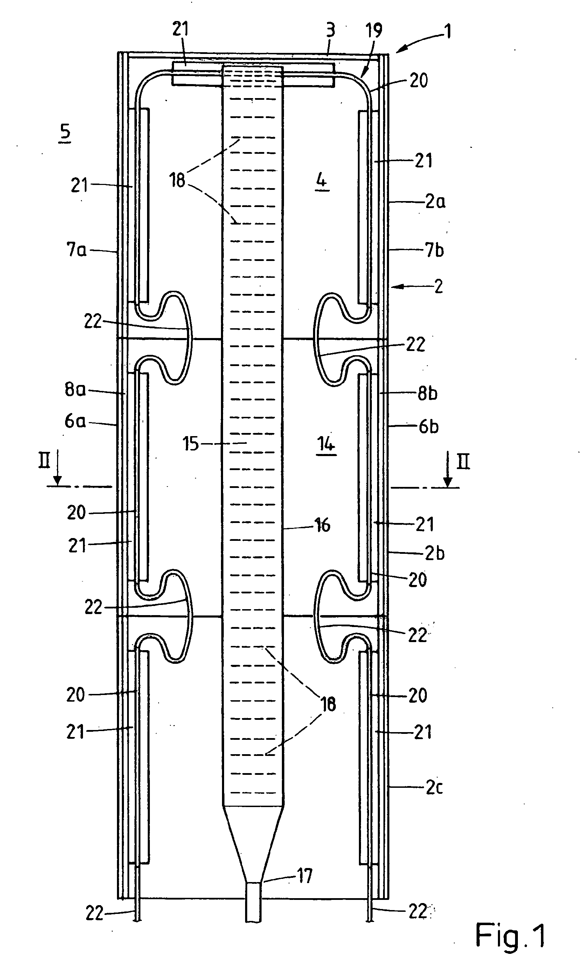

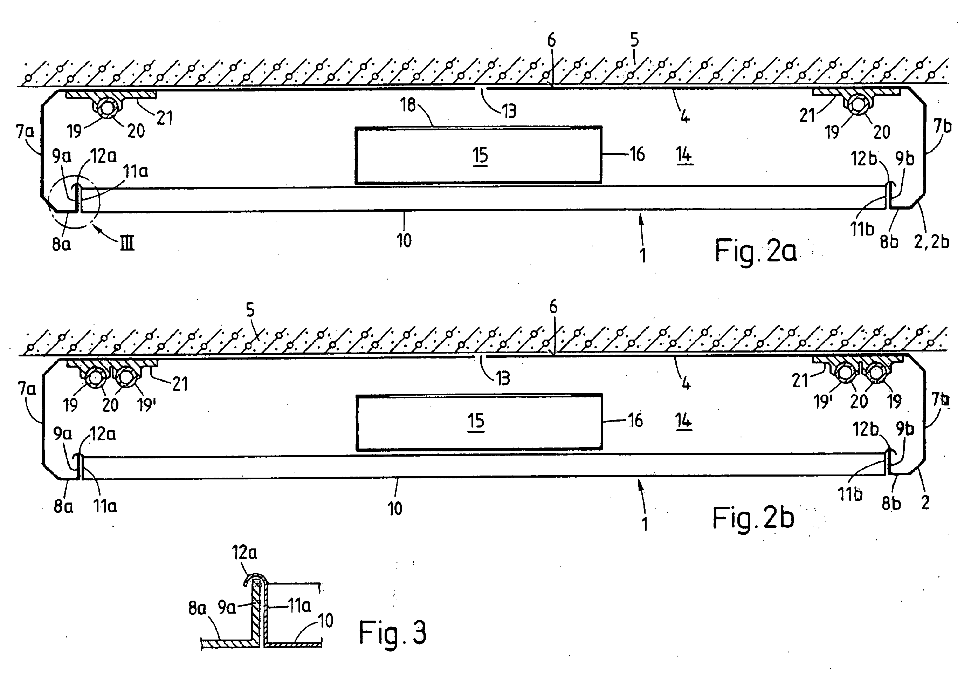

Das erfindungsgemässe Kühlelement 1 gemäss einer ersten Ausführungsform (Fig. 1, 2a) umfasst ein etwa quaderförmiges längliches Gehäuse 2, das einige Meter lang und beispielsweise ca. 60cm breit sein kann. Es ist im Beispiel aus drei Gehäuseabschnitten 2a,b,c zusammengesetzt, deren Querschnitt in Längsrichtung gleichbleibend ist und die aus Blech, z.B. Aluminiumblech von zwischen 1,5mm und 2mm Dicke gebogen sind. Die Gehäuseabschnitte 2a,b,c sind gleich, wenn man davon absieht, dass der vorderste Gehäuseabschnitt 2a eine abschliessende Stirnwand 3 aufweist. Auf diese Weise können Gehäuse unterschiedlicher Längen gebildet werden.

Das Gehäuse 2 weist an der Oberseite eine waagrechte ebene Decke 4 auf, deren Oberseite eine gegen eine Raumdecke 5, unter der das Kühlelement 1 aufgehängt ist, weisende Deckfläche 6 bildet. Die Deckfläche 6 ist von der Raumdecke 5 um zwischen 1mm und 5mm, vorzugsweise ca. 2mm beabstandet, so dass zwischen ihnen ein Luftspalt liegt. An den Seiten schliessen nach unten abgebogene Seitenteile an, welche senkrechte Seitenwände 7a,b und am unteren Rand derselben anschliessende waagrecht nach innen abgebogene Rahmenleisten 8a,b und an deren inneren Rändern senkrecht nach oben abgebogene Stege 9a,b umfassen.

An der Unterseite weist das Gehäuse 2 eine sich über die ganze Länge des Kühlelements 1 erstreckende rechteckige Oeffnung auf, welche durch eine waagrechte luftdurchlässige Wand 10 (in Fig. 1 weggelassen) verschlossen ist. Sie ist ebenfalls aus drei Kühlwandabschnitten zusammengesetzt, deren jeder sich über einen der Gehäuseabschnitte 2a,b,c erstreckt. An beiden Seitenrändern schliessen an die luftdurchlässige Wand 10 vorzugsweise mit ihr einstückige nach oben ragende Streifen 11a,b (s. auch Fig. 3) an, welche jeweils in ein nach aussen gebogenes Hakenprofil 12a;b übergehen, dessen konkave, rinnenförmige Unterseite auf dem oberen Rand des Steges 9a;b aufliegt. Diese Art der Fixierung der luftdurchlässigen Wand 10 bewirkt eine Selbstzentrierung auch bei durch Fabrikationstoleranzen bewirkten Abweichungen der Breite derselben oder des Abstands der Stege 9a, 9b von Normwerten oder bei durch Wärmedehnung verursachten unterschiedlichen Schwankungen dieser Dimensionen. Ausserdem ist der Wärmeübergang zwischen dem Gehäuse 2 und der luftdurchlässigen Wand 10 wegen der sehr kleinen Kontaktfläche gering. Darüberhinaus kann die Wand sehr einfach und bequem in die Oeffnung eingesetzt werden. Es ist auch möglich, nur auf einer Seite ein Hakenprofil vorzusehen und auf der anderen Seite eine ebene Halteleiste, die mit der Unterseite auf dem Steg aufliegt.

Die luftdurchlässige Wand 10 weist kleine über ihre ganze Fläche verteilte Oeffnungen auf. Sie kann als Kühlwand aus Blech, vorzugsweise dünnem Stahlblech ausgebildet sein und Mikrolöcher von nicht mehr als 0,8mm oder besser 0,6mm, vorzugsweise ca. 0,5mm Durchmesser aufweisen, die z.B. in einem quadratischen Raster in Abständen von ca. 5mm angeordnet sind. Der Anteil des freien Querschnitts kann also gering sein, z.B. ca. 1% oder weniger betragen. Günstig ist auch ein hoher Wärmeleitwert, wie ihn dünnes Stahlblech oder Aluminiumblech aufweist. Die luftdurchlässige Wand 10 kann jedoch auch als Lochblech, etwa aus Aluminium mit z.B. 16% freiem Querschnitt und 2,5mm Lochdurchmesser ausgebildet sein, das mit einem lackierten Vlies belegt ist, in welchem Fall sie eine ausgeprägte lärmdämpfende Wirkung hat. Die Oeffnungen werden dann vor allem von der Struktur des Vlieses bestimmt und sind noch wesentlich kleiner als für die Kühlwand angegeben.

Die Decke 4 weist längs einer Mittellinie in Längsrichtung aufeinanderfolgende Luftauslässe 13 auf, welche als runde Löcher mit einem Durchmesser von zwischen 2mm und 4mm, z.B. 2,5mm ausgebildet sein können, welche in gleichen Abständen von zwischen 10mm und 20mm, z.B. ca. 15mm, in Längsrichtung aufeinanderfolgen.

Das Gehäuse 2 und die luftdurchlässige Wand 10 umschliessen eine Kammer 14, in welcher eine sich im wesentlichen über die ganze Länge des Kühlelements 1 erstreckende Vorkammer 15 rechteckigen Querschnitts angeordnet ist, welche durch eine sie umschliessende Trennwand 16 z.B. aus Aluminiumblech vom verbleibenden Aussenteil der Kammer 14 getrennt ist. Die Trennwand 16 ist mittig und mit Abstand sowohl zur luftdurchlässigen Wand 10 als auch zur Decke 4 in der Kammer 14 angebracht. Am hinteren Ende weist sie einen Luftanschluss 17 auf. An der Oberseite ist sie von als querverlaufende Schlitze 18 ausgebildeten Verbindungsöffnungen durchbrochen, welche in Längsrichtung in einem Abstand von zwischen 50mm und 150mm, z.B. ca. 90mm regelmässig aufeinanderfolgen und jeweils eine Breite von höchstens 2mm oder 1,5mm, vorzugsweise von ca. 1mm aufweisen. Im übrigen ist die Trennwand 16 luftdicht.

An der Unterseite der Decke 4 ist eine Leitung 19 zur Führung einer Kühlflüssigkeit oder Heizflüssigkeit, gewöhnlich Kalt- bzw. Warmwasser, angebracht, welche in den Gehäuseabschnitten 2a,b,c, jeweils aus Abschnitten von Kupferrohr 20 besteht, die in mit der Decke 4 verklebten Wärmeleitschienen 21 geführt sind, so dass eine gute wärmeleitende Verbindung zwischen der Leitung 19 und der Decke 4 gewährleistet ist. Die Rohrabschnitte sind durch Verbindungsschläuche 22, z.B. Kunststoff- oder Metallschläuche miteinander und mit Anschlüssen verbunden. Die Leitung 19 läuft knapp neben dem einen Seitenrand der Decke 4 vom hinteren zum vorderen Ende des Kühlelements 1, dort zum gegenüberliegenden Seitenrand und diesen entlang zum hinteren Ende zurück.

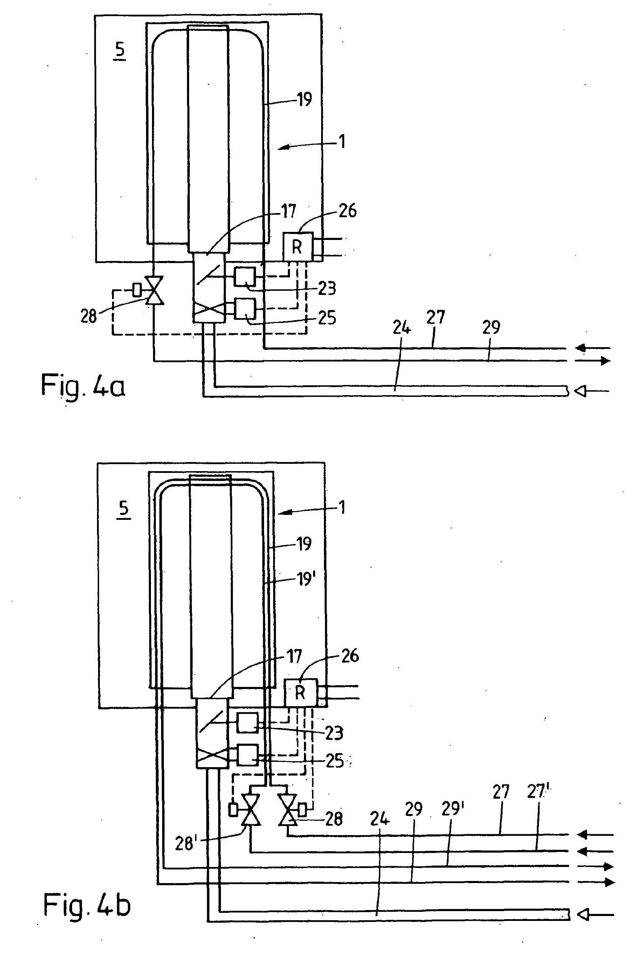

Der Luftanschluss 17 ist (Fig. 4a) über ein Regelventil 23 mit einer Luftzuleitung 24 verbunden. Das Regelventil 23 wird, u.a. abhängig vom Ausgangssignal eines Messumformers 25, der die momentane Luftrate erfasst, von einem Regler 26 gesteuert. Die Leitung 19 wird als Kühlleitung betrieben. Am einen Ende ist sie mit einem Kaltwasservorlauf 27 verbunden und am anderen Ende über ein Regelventil 28, das ebenfalls vom Regler 26 gesteuert wird, mit einem Kaltwasserrücklauf 29. Auf diese Weise kann etwa eine Reihe von Kühlelementen, die längs eines Ganges aufeinanderfolgende Büros klimatisieren, vom Gang her, längs dessen die Luftzuleitung 24, der Kaltwasservorlauf 27 und der Kaltwasserrücklauf 29 geführt sind, versorgt werden. Das Kühlelement 1 erstreckt sich dann jeweils vom gangseitigen Ende bis nahe an das fensterseitige Ende des Büros.

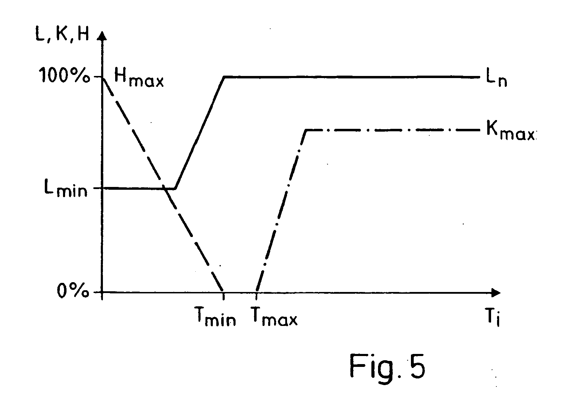

Die das Kühlelement 1 und die Raumdecke 5 umfassende Kühleinrichtung kann während einer Arbeitszeit, also in der Regel tagsüber, so betrieben werden wie dies in Fig. 5 dargestellt ist. Dabei sind die Luftrate L (durchgezogen) und die Kühlflüssigkeitsrate K (strichpunktiert) als Funktionen der Raumtemperatur Tᵢ dargestellt. Oberhalb einer minimalen Arbeitstemperatur Tₘᵢₙ von z.B. 22°C wird Kühlluft mit einer Kühllufttemperatur von zwischen 10°C und 15°C, vorzugsweise ca. 12°C mit einer Normalrate Lₙ in das Kühlelement 1 geleitet. Die Normalrate Lₙ entspricht einem von der Raumgrösse, der Belastung des Raumes und den Bedürfnissen der Benützer abhängigen einstellbaren Wert, der z.B. zwischen 60m³/h und 120m³/h betragen kann. Steigt die Raumtemperatur Tᵢ über eine maximale Arbeitstemperatur Tₘₐₓ von z.B. 26°C, welche die Raumtemperatur in der Regel nicht wesentlich - z.B. um höchstens 1°C - übersteigen sollte, so wird das Regelventil 28 geöffnet, so dass Kaltwasser mit einer Temperatur von z.B. 14°C in die Leitung 19 geleitet wird. Bei weiter steigender Raumtemperatur Tᵢ wird das Regelventil 28 weiter geöffnet. Die Kühlflüssigkeitsrate K kann z.B. eine lineare Funktion der Raumtemperatur Tᵢ sein, bis sie ihren Maximalwert Kₘₐₓ erreicht.

Sinkt die Raumtemperatur Tᵢ unter die minimale Arbeitstemperatur Tₘᵢₙ, so wird zur Verminderung der Kühlung das Regelventil 23 etwas zugemacht und die Luftrate L reduziert. Sie kann eine z.B. linear fallende Funktion der Raumtemperatur Tᵢ sein. Die Luftrate L wird jedoch höchstens bis zu einer Minimalluftrate Lₘᵢₙ von z.B. 30m³/h reduziert, welche immer noch eine ausreichende Luftzufuhr, z.B. einen mindestens ein- oder zweimaligen Luftwechsel gewährleistet.

Die mit der Kühllufttemperatur von etwa 12°C über den Anschluss 17 in die Vorkammer 15 einströmende Kühlluft tritt durch die Schlitze 18 in die Kammer 14 aus. Da der Druckabfall längs der Vorkammer 15 mit ihrem ziemlich grossen Querschnitt sehr viel geringer ist als die wegen der Schmalheit der Schlitze 18 verhältnismässig grosse Druckdifferenz zwischen der Vorkammer 15 und dem Aussenteil der Kammer 14, ist die Ausströmung durch die Schlitze 18 über die Länge des Kühlelements 1 praktisch konstant und auch die Temperatur der Kühlluft ändert sich nur wenig. Aus der Kammer 15 strömt die Kühlluft grösstenteils durch die luftdurchlässige Wand 10 in den Raum, wo sie, da sie kälter und schwerer ist als die Raumlauft, nach unten fällt und leicht bis in den Atembereich der Raumbenutzer vordringt. Da die luftdurchlässige Wand 10 dabei auch gekühlt wird, kühlt sie den Raum auch durch Strahlungsaustausch, bei dem sie mehr Wärme aufnimmt, als sie abgibt. Dieser Beitrag kann vor allem dann bedeutend sein, wenn der freie Querschnitt der luftdurchlässigen Wand 10 verhältnismässig klein und ihr Wärmeleitwert gross ist.

Ein Teil der Kühlluft strömt jedoch durch die Luftauslässe 13 in der Decke 4 und zwischen der Deckfläche 6 und der Raumdecke 5 zu den Seitenrändern der Deckfläche 6, wo sie dann ebenfalls die Seitenwände 7a,b des Kühlelements entlang nach unten sinkt. Während sie durch den Luftspalt streicht, nimmt sie allfällige Feuchtigkeit von der Raumdecke 5 auf, während ihre Temperatur sich der Temperatur derselben annähert.

Fliesst Kaltwasser durch die Leitung 19, so werden die Decke 4 und die Seitenteile des Kühelelements 1 durch wärmeleitenden Kontakt mit derselben stärker gekühlt und tragen zur Raumkühlung bei. Dies geschieht vor allem durch direkten Strahlungsaustausch mit dem Raum, aber auch durch Strahlungsaustausch mit der Raumdecke 5, Wärmeleitung in derselben und Strahlungsaustausch zwischen das Kühlelement 1 umgebenden Deckenbereichen und dem Raum sowie durch Kontakt der durch die Luftauslässe 13 ausgetretenen Kühlluft mit der Deckfläche 6.

Während einer Zwischenzeit, welche die ganze ausserhalb der Arbeitszeit liegende Zeit umfassen kann, gewöhnlich also nachts, wird im Bedarfsfall Kaltwasser durch die Leitung 19 geleitet. Dadurch wird vor allem die Decke 4 stark abgekühlt und kühlt durch Strahlungsaustausch über die Deckfläche 6 die Raumdecke 5, vor allem unmittelbar oberhalb des Kühlelements 1. Durch Wärmeleitung innerhalb der Raumdecke 5 ergibt sich jedoch auch eine Abkühlung des das Kühlelement 1 umgebenden Bereichs der Raumdecke 5. Die Kühlung der Raumdecke 5 könnte auch ganz odere teilweise durch Kühlluft erfolgen, doch ist es kostengünstiger, ausschliesslich mit Kaltwasser zu kühlen, da Lufttransport verhältnismässig teuer ist und während der Zwischenzeit kein Frischluftbedarf besteht.

Die Kühlung wird so angelegt, dass die Raumtemperatur Tᵢ zum Ende der Zwischenzeit und Beginn der Arbeitszeit etwa der minimalen Arbeitstemperatur Tₘᵢₙ entspricht. Auch die Temperatur der Raumdecke 5 liegt dann in diesem Bereich oder auch etwas tiefer, so dass der durch das Kühlelement 1 vorgekühlte Bereich der Raumdecke 5 während der Arbeitszeit einen wesentlichen Beitrag zur Kühlung des Raumes leistet, und zwar in der Umgebung des Kühlelements 1 vor allem durch direkten Strahlungsaustausch mit dem Raum und oberhalb des Kühlelements 1 durch Wechselwirkung mit der durch die Luftauslässe 13 austretenden Kühlluft, die beim Durchströmen des Luftspaltes zwischen der Raumdecke 5 und der Deckfläche 6 verhältnismässig kühl bleibt. Statt Kaltwasser kann im Winter auch Warmwasser als Heizflüssigkeit durch den Wasserkreislauf und die Leitung 19 geleitet werden (changeover-Betrieb), und zwar sowohl während der Arbeitszeit als auch während der Zwischenzeit. Wegen der eventuell unterschiedlichen Wärmebelastung der Räume ist dies jedoch im allgemeinen nicht befriedigend.

Bei einer von der ersten geringfügig abweichenden zweiten Ausführungsform ist (Fig. 2b) in einem sonst gleich ausgebildeten Kühlelement 1 parallel zur Leitung 19 eine zweite Leitung 19' geführt, die im übrigen gleich ausgebildet ist. Die Leitungen 19 und 19' sind an einem Ende mit einem Kaltwasservorlauf 27 bzw. einem Warmwasservorlauf 27' verbunden, und zwar über ein Regelventil 28 bzw. 28' und am entgegengesetzten Ende mit einem Kaltwasserrücklauf 29 bzw. einem Warmwasserrücklauf 29'.

Wenn die Raumtemperatur Tᵢ nun unter die minimale Arbeitstemperatur Tₘᵢₙ sinkt, so wird neben der Reduktion der Luftrate L das Regelventil 28' geöffnet, so dass Warmwasser mit einer Temperatur von z.B. 35°C in die Leitung 19' geleitet wird. Die Heizflüssigkeitsrate H (in Fig. 5 gestrichelt) ist dabei zwischen der Temperatur, bei der sie ihr Maximum Hₘₐₓ erreicht und der minimalen Arbeitstemperatur Tₘᵢₙ eine - z.B. linear - abnehmende Funktion der Raumtemperatur Tᵢ.

Durch die Heizflüssigkeit wird das Gehäuse 2 erwärmt. Wegen des geringen Wärmeübergangs zwischen den Seitenteilen und der luftdurchlässigen Wand 10 beeinflusst dies die letztere kaum, so dass die durch sie austretende Kühlluft nicht zu stark erwärmt wird und ihre Temperatur immer unter der Raumtemperatur bleibt. Die durch die Luftauslässe 13 ausgetretene Kühlluft nimmt dagegen von der Deckfläche 6 Wärme auf, wird aber gewöhnlich auch nicht über die Raumtemperatur erwärmt. Es ist aber nicht weiter störend, wenn dieser Fall einmal eintritt, da sie nur einen geringen Beitrag zur gesamten Luftzufuhr liefert. Die durch das Warmwasser gewärmten Seitenteile des Kühlelements 1, insbesondere die nach unten weisenden Rahmenstreifen 8a,b, heizen den Raum direkt durch Strahlungsaustausch, während über die Raumdecke 5 eine indirekte Heizung durch Wärmeleitung und Strahlungsaustausch eintritt.

Während der Zwischenzeit kann bei tiefen Temperaturen ebenfalls Heizflüssigkeit durch die Leitung 19' geleitet werden, wobei die Heizflüssigkeitstemperatur und -rate so gewählt werden, dass wiederum am Ende der Zwischenzeit eine Raumtemperatur erreicht wird, die im wesentlichen der minimalen Arbeitstemperatur Tₘᵢₙ entspricht. Dabei wird auch die Raumdecke 5 leicht vorgeheizt, was den Heizbedarf während der Arbeitszeit verringert.

Es ist auch möglich, ein Kühlelement 1 gemäss der ersten Ausführungsform (Fig. 1, 2a) einzusetzen, aber zugleich sowohl einen Kaltwasservor- und -rücklauf und einen Warmwasservor- und -rücklauf vorzusehen und die Leitung 19 auf der einen Seite über Regelventile mit beiden Vorläufen zu verbinden und auf der anderen mit beiden Rückläufen, so dass die Leitung 19 wahlweise mit dem Kaltwasserkreislauf oder mit dem Warmwasserkreislauf verbunden werden kann und im wesentlichen die gleichen Funktionen übernimmt wie das Kühlelement gemäss der zweiten Ausführungsform.

Mit den dargestellten Kühleinrichtungen und Verfahren ist es stets möglich, einerseits eine ausreichende Luftzufuhr zu gewährleisten, andererseits selbst bei hohem Kühlbedarf eine Raumtemperatur einzustellen, die im Komfortbereich von zwischen 22°C und 26°C liegt, ohne dass die Luftzufuhr Werte annehmen müsste, die weit über dem durch den Frischluftbedarf Gebotenen liegen, was störende Turbulenzen, Temperaturinhomogenitäten und Geräusche verursachen könnte und sehr gross dimensionierte, teure Kühlelemente erforderlich machen würde. Die thermische Trägheit der Raumdecke wird ausgenützt, ohne dass aufwendige bauliche Massnahmen nötig wären. Es ist stets sichergestellt, dass die Zuluft so temperiert ist, dass sie auch in die Atemhöhe der Raumbenutzer gelangt. Die erfindungsgemässe Kühleinrichtung ermöglicht so eine alle Anforderungen erfüllende Klimatisierung bei geringem apparativem Aufwand und verhältnismässig tiefen Betriebskosten.

### Bezugszeichenliste

- 1: Kühlelement
- 2: Gehäuse
- 2a,b,c: Gehäuseabschnitt
- 3: Stirnwand
- 4: Decke
- 5: Raumdecke
- 6: Deckfläche
- 7a,b: Seitenwand
- 8a,b: Rahmenleiste
- 9a,b: Steg
- 10: luftdurchlässige Wand
- 11a,b: Streifen
- 12a,b: Hakenprofil
- 13: Luftauslass
- 14: Kammer
- 15: Vorkammer
- 16: Trennwand
- 17: Luftanschluss
- 18: Schlitz
- 19, 19': Leitung
- 20: Kupferrohr
- 21: Wärmeleitschiene
- 22: Verbindungsschlauch
- 23: Regelventil
- 24: Luftzuleitung
- 25: Messumformer
- 26: Regler
- 27: Kaltwasservorlauf
- 27': Warmwasservorlauf
- 28, 28': Regelventil
- 29: Kaltwasserrücklauf
- 29': Warmwasserrücklauf

## Patentansprüche

1. Kühlelement (1) mit einem Gehäuse (2), das an einer Oberseite durch eine sich im wesentlichen über seine ganze Länge erstreckende ebene Deckfläche (6) begrenzt ist und mit einer sich im wesentlichen über seine ganze Länge erstreckenden luftdurchlässigen Wand (10), welche es an mindestens einem Teil der Unterseite begrenzt, derart, dass das Gehäuse (2) und die luftdurchlässige Wand (10) eine Kammer (14), welche an einem hinteren Ende einen Luftanschluss (17) aufweist, umgeben, **dadurch gekennzeichnet, dass** es mindestens eine innerhalb der Kammer (14) vom hinteren Ende derselben im wesentlichen über ihre ganze Länge bis zu einem gegenüberliegenden vorderen Ende und zurück laufende Leitung (19, 19') zur Führung einer Heiz- oder Kühlflüssigkeit aufweist, welche an der Unterseite einer Decke (4) des Gehäuses (2) angebracht ist, dessen Oberseite die Deckfläche (6) bildet und thermisch an die Deckfläche (6) gekoppelt ist.

2. Kühlelement nach Anspruch 1, **dadurch gekennzeichnet, dass** die mindestens eine Leitung (19, 19') im wesentlichen an den Seitenrändern der Decke (4) angeordnet ist.

3. Kühlelement nach Anspruch 1 oder 2, **dadurch gekennzeichnet, dass** sie zwei Leitungen (19, 19') aufweist, welche vorzugsweise im wesentlichen parallel verlaufen.

4. Kühlelement nach einem der Ansprüche 1 bis 3, **dadurch gekennzeichnet, dass** es im wesentlichen über die ganze Länge der Deckfläche (6) verteilte, mit dem Inneren der Kammer (14) verbundene Luftauslässe (13) aufweist.

5. Kühlelement nach Anspruch 4, **dadurch gekennzeichnet, dass** die Luftauslässe (13) im wesentlichen längs einer Mittellinie der Deckfläche (6) angeordnet sind.

6. Kühlelement nach Anspruch 5, **dadurch gekennzeichnet, dass** die Luftauslässe (13) in gleichen Abständen von vorzugsweise zwischen 10mm und 20mm aufeinanderfolgen.

7. Kühlelement nach einem der Ansprüche 4 bis 6, **dadurch gekennzeichnet, dass** die Luftauslässe (13) als runde Löcher, vorzugsweise mit einem Durchmesser von zwischen 2mm und 3mm, ausgebildet sind.

8. Kühlelement nach einem der Ansprüche 1 bis 7, **dadurch gekennzeichnet, dass** es eine innerhalb der Kammer (14) angeordnete, sich im wesentlichen über deren ganze Länge erstreckende Vorkammer (15) umfasst, welche durch im wesentlichen über ihre ganze Länge verteilte Verbindungsöffnungen mit dem verbleibenden Aussenteil der Kammer (14) verbunden ist und an deren hinterem Ende der Luftanschluss (17) mündet.

9. Kühlelement nach einem der Ansprüche 1 bis 7 und Anspruch 8, **dadurch gekennzeichnet, dass** die Verbindungsöffnungen im wesentlichen an einer der Decke (4) mit Abstand gegenüberliegenden Oberseite der Vorkammer (15) angebracht sind.

10. Kühlelement nach Anspruch 8 oder 9, **dadurch gekennzeichnet, dass** die Verbindungsöffnungen eine Breite von höchstens 2mm, vorzugsweise höchstens 1,5mm aufweisen.

11. Kühlelement nach Anspruch 10, **dadurch gekennzeichnet, dass** die Verbindungsöffnungen als in Querrichtung verlaufende Schlitze (18) ausgebildet sind.

12. Kühlelement nach einem der Ansprüche 8 bis 11, **dadurch gekennzeichnet, dass** die Verbindungsöffnungen, vorzugsweise mit einem Abstand von zwischen 5cm und 15cm, in Längsrichtung aufeinanderfolgen.

13. Kühlelement nach einem der Ansprüche 8 bis 12, **dadurch gekennzeichnet, dass** die Vorkammer (15) einen im wesentlichen rechteckigen Querschnitt aufweist.

14. Kühlelement nach einem der Ansprüche 1 bis 13, **dadurch gekennzeichnet, dass** das Gehäuse (2) beidseits an die Decke (4) anschliessende Seitenteile umfasst, an welchen die luftdurchlässige Wand (10) befestigt ist.

15. Kühlelement nach Anspruch 14, **dadurch gekennzeichnet, dass** die luftdurchlässige Wand (10) im wesentlichen waagrecht ist und die Seitenteile Rahmenstreifen (8a, 8b) aufweisen, welche rahmenartig beidseits an die luftdurchlässige Wand (10) anschliessen.

16. Kühlelement nach Anspruch 14 oder 15, **dadurch gekennzeichnet, dass** die Seitenteile nach oben ragende, in Längsrichtung verlaufende Stege (9a, 9b) umfassen und die luftdurchlässige Wand (10) an mindestens einem Seitenrand ein nach unten konkaves, ebenfalls in Längsrichtung verlaufendes Hakenprofil (12a, 12b) aufweist, welches den oberen Rander eines der Stege (9a, 9b) übergreift.

17. Kühlelement nach einem der Ansprüche 1 bis 16, **dadurch gekennzeichnet, dass** das Gehäuse (2) oder jeder von mehreren in Längsrichtung aufeinanderfolgenden Gehäuseabschnitten (2a, 2b, 2c) ein einstückiges Biegeteil aus Blech bildet.

18. Kühlelement nach einem der Ansprüche 1 bis 17, **dadurch gekennzeichnet, dass** das es im wesentlichen quaderförmig ist.

19. Kühlelement nach einem der Ansprüche 1 bis 18, **dadurch gekennzeichnet, dass** die luftdurchlässige Wand (10) als Kühlwand ausgebildet ist mit über ihre Fläche verteilten Mikroöffnungen, die einen Durchmesser von nicht mehr als 0,8mm, vorzugsweise nicht mehr als 0,6mm aufweisen.

20. Kühlelement nach Anspruch 19, **dadurch gekennzeichnet, dass** die Kühlwand aus Blech besteht, welches von den Mikroöffnungen durchbrochen ist.

21. Kühlelement nach einem der Ansprüche 1 bis 18, **dadurch gekennzeichnet, dass** die luftdurchlässige Wand (10) im wesentlichen als ein mit einem Vlies belegtes Lochblech ausgebildet ist.

22. Kühleinrichtung mit einem Kühlelement (1) nach einem der Ansprüche 1 bis 21 sowie mit einer Raumdecke (5), an deren Unterseite das Kühlelement (1) derart befestigt ist, dass die Deckfläche (6) einen Abstand von zwischen 2mm und 10mm zur Unterseite der Raumdecke (5) aufweist.

23. Verfahren zum Betrieb einer Kühleinrichtung nach Anspruch 22, **dadurch gekennzeichnet, dass** während einer Arbeitszeit jeweils Luft mit einer Luftrate (L), die zwischen einer Minimalrate (Lₘᵢₙ) und einer Normalrate (Lₙ) liegt, in das Kühlelement (1) eingeleitet wird und jeweils, wenn die Raumtemperatur (Tᵢ) über eine maximale Arbeitstemperatur (Tₘₐₓ) steigt, Kühlflüssigkeit durch die mindestens eine Leitung (19) geleitet wird.

24. Verfahren nach Anspruch 23, **dadurch gekennzeichnet, dass** die Kühlflüssigkeitsrate (K) in einem unmittelbar oberhalb der maximalen Arbeitstemperatur (Tₘₐₓ) liegenden Intervall eine steigende Funktion der Raumtemperatur (Tᵢ) ist.

25. Verfahren nach einem der 23 oder 24, **dadurch gekennzeichnet, dass** während der Arbeitszeit die Luftrate (L) bei einer Raumtemperatur (Tᵢ), die mindestens der minimalen Arbeitstemperatur (Tₘᵢₙ) entspricht, der Normalrate (Lₙ) entspricht und jeweils, wenn die Raumtemperatur (Tᵢ) unter die minimale Arbeitstemperatur (Tₘᵢₙ) sinkt, unter die Normalrate (Lₙ) gesenkt wird.

26. Verfahren nach Anspruch 25, **dadurch gekennzeichnet, dass** die Luftrate (L) in einem unmittelbar unterhalb der minimalen Arbeitstemperatur (Tₘᵢₙ) liegenden Intervall eine fallende Funktion der Raumtemperatur (Tᵢ) ist.

27. Verfahren nach einem der Ansprüche 23 bis 26, **dadurch gekennzeichnet, dass** während der Arbeitszeit, wenn die Raumtemperatur (Tᵢ) unter eine minimale Arbeitstemperatur (Tₘᵢₙ) sinkt, Heizflüssigkeit durch die mindestens eine Leitung (19, 19') geleitet wird.

28. Verfahren nach Anspruch 27, **dadurch gekennzeichnet, dass** die Heizflüssigkeitsrate (H) in einem unmittelbar unterhalb der minimalen Arbeitstemperatur (Tₘᵢₙ) liegenden Intervall eine fallende Funktion der Raumtemperatur (Tᵢ) ist.

29. Verfahren zum Betrieb einer Kühleinrichtung nach Anspruch 22, **dadurch gekennzeichnet, dass** während einer ausserhalb der Arbeitszeit liegenden Zwischenzeit Kühlflüssigkeit oder Heizflüssigkeit durch die mindestens eine Leitung (19, 19') geleitet wird.

30. Verfahren nach Anspruch 29, **dadurch gekennzeichnet, dass** die Flüssigkeitstemperatur und -rate so gewählt werden, dass die Raumtemperatur (Tᵢ) am Ende der Zwischenzeit im wesentlichen der minimalen Arbeitstemperatur (Tₘᵢₙ) entspricht.

31. Verfahren nach Anspruch 29 oder 30, **dadurch gekennzeichnet, dass** während der Zwischenzeit keine Kühlluft in das Kühlelement (1) eingeleitet wird.

## Claims

1. Cooling element (1) comprising a housing (2) which is bounded at a top by a flat top surface (6) extending substantially over its entire length, and comprising an air-permeable wall (10) which extends substantially over its entire length and bounds it in at least a part of the bottom in such a way that the housing (2) and the air-permeable wall (10) surround a chamber (14) which has an air connection (17) at a rear end, **characterized in that** it has at least one pipe (19, 19') for transporting a heating or cooling liquid, which runs inside the chamber (14) from the rear end thereof substantially over its entire length to an opposite front end and back and is mounted on the underside of a ceiling (4) of the housing (2), the top of which forms the top surface (6) and thermally coupled to the top surface (6).

2. Cooling element according to Claim 1, **characterized in that** the at least one pipe (19, 19') is arranged substantially at the lateral edges of the ceiling (4).

3. Cooling element according to Claims 1 or 2, **characterized in that** it has two pipes (19, 19') which are preferably substantially parallel.

4. Cooling element according to any of Claims 1 to 3, **characterized in that** it has air outlets (13) distributed substantially over the entire length of the top surface (6) and connected to the interior of the chamber (14).

5. Cooling element according to Claim 4, **characterized in that** the air outlets (13) are arranged substantially along a centre line of the top surface (6).

6. Cooling element according to Claim 5, **characterized in that** the air outlets (13) follow one another at equal distances of, preferably, between 10 mm and 20 mm.

7. Cooling element according to any of Claims 4 to 6, **characterized in that** the air outlets (13) are in the form of round holes, preferably having a diameter of between 2 mm and 3 mm.

8. Cooling element according to any of Claims 1 to 7, **characterized in that** it comprises an antechamber (15) which is arranged inside the chamber (14), extends substantially over the entire length thereof, is connected to the remaining outer part of the chamber (14) by connecting openings distributed substantially over the entire length of said antechamber and at the rear end of which the air connection (17) connects.

9. Cooling element according to any of Claims 1 to 7 and Claim 8, **characterized in that** the connecting openings are mounted substantially at a top of the antechamber (15) which is opposite the ceiling (4) and a distance away therefrom.

10. Cooling element according to Claim 8 or 9, **characterized in that** the connecting openings have a width of not more than 2 mm, preferably not more than 1.5 mm.

11. Cooling element according to Claim 10, **characterized in that** the connecting openings are in the form of slots (18) running in the transverse direction.

12. Cooling element according to any of Claims 8 to 11, **characterized in that** the connecting openings follow one another in the longitudinal direction, preferably at a distance of between 5 cm and 15 cm.

13. Cooling element according to any of Claims 8 to 12, **characterized in that** the antechamber (15) has a substantially rectangular cross-section.

14. Cooling element according to any of Claims 1 to 13, **characterized in that** the housing (2) comprises side parts which are adjacent to the ceiling (4) on both sides and to which the air-permeable wall (10) is fastened.

15. Cooling element according to Claim 14, **characterized in that** the air-permeable wall (10) is substantially horizontal and the side parts have frame strips (8a, 8b) which are adjacent to the air-permeable wall (10) on both sides in the manner of a frame.

16. Cooling element according to Claim 14 or 15, **characterized in that** the side parts comprise upward-projecting fins (9a, 9b) running in the longitudinal direction, and the air-permeable wall (10) has, at at least one lateral edge a hook profile (12a, 12b) which is concave in a downward direction, likewise runs in the longitudinal direction and grips over the upper edges of one of the fins (9a, 9b).

17. Cooling element according to any of Claims 1 to 16, **characterized in that** the housing (2) or each of a plurality of housing sections (2a, 2b, 2c) following one another in the longitudinal direction forms an integral bent part of sheet metal.

18. Cooling element according to any of Claims 1 to 17, **characterized in that** it is substantially in the form of a right parallelepiped.

19. Cooling element according to any of Claims 1 to 18, **characterized in that** the air-permeable wall (10) is in the form of a cooling wall having micro-openings which are distributed over its area and have a diameter of not more than 0.8 mm, preferably not more than 0.6 mm.

20. Cooling element according to Claim 19, **characterized in that** the cooling wall consists of sheet metal which is penetrated by the micro-openings.

21. Cooling element according to any of Claims 1 to 18, **characterized in that** the air-permeable wall (10) is substantially in the form of a perforated metal sheet covered with a nonwoven.

22. Cooling device comprising a cooling element (1) according to any of Claims 1 to 21 and comprising a room ceiling (5) to the underside of which the cooling element (1) is fastened in a manner such that the top surface (6) is a distance of between 2 mm and 10 mm from the underside of the room ceiling (5).

23. Method for operating a cooling device according to Claim 22, **characterized in that** in each case air is passed at an air flow rate (L) which is between a minimum rate (Lₘᵢₙ) and a standard rate (Lₙ) into the cooling element (1) during working hours, and cooling liquid is passed through the at least one pipe (19) in each case if the room temperature (Tᵢ) exceeds a maximum operating temperature (Tₘₐₓ).

24. Method according to Claim 23, **characterized in that** the cooling liquid flow rate (K) in an interval lying directly above the maximum operating temperature (Tₘₐₓ) is an ascending function of the room temperature (Tᵢ).

25. Method according to either of Claims 23 and 24, **characterized in that**, during working hours, the air flow rate (L) at a room temperature (Tᵢ), which corresponds at least to the minimum operating temperature (Tₘᵢₙ), corresponds to the standard rate (Lₙ) and is reduced below the standard rate (Lₙ) in each case when the room temperature (Tᵢ) falls below the minimum operating temperature (Tₘin).

26. Method according to Claim 25, **characterized in that** the air flow rate (L) in an interval lying directly below the minimum operating temperature (Tₘᵢₙ) is a descending function of the room temperature (Tᵢ).

27. Method according to any of Claims 23 to 26, **characterized in that** heating liquid is passed through the at least one pipe (19, 19') during working hours if the room temperature (Tᵢ) falls below a minimum operating temperature (Tₘᵢₙ).

28. Method according to Claim 27, **characterized in that** the heating liquid flow rate (H) in an interval lying directly below the minimum operating temperature (Tₘᵢₙ) is a descending function of the room temperature (Tᵢ).

29. Method for operating a cooling device according to Claim 22, **characterized in that** cooling liquid or heating liquid is passed through the at least one pipe (19, 19') during an intermediate time outside working hours.

30. Method according to Claim 29, **characterized in that** the liquid temperature and liquid flow rate are chosen so that the room temperature (Tᵢ) at the end of the intermediate time substantially corresponds to the minimum operating temperature (Tₘᵢₙ).

31. Method according to Claim 29 or 30, **characterized in that** no cooling air is passed into the cooling element (1) during the intermediate time.

## Revendications

1. Elément de refroidissement (1) comportant un boîtier (2), qui est délimité au niveau d'une face supérieure par une surface de recouvrement plane (6) s'étendant pour l'essentiel sur toute sa longueur et une paroi perméable à l'air (10) s'étendant pour l'essentiel sur toute sa longueur, laquelle le délimite au niveau d'au moins une partie de la face inférieure de telle manière que le boîtier (2) et la paroi perméable à l'air (10) entourent une chambre (14), laquelle présente une prise d'air (17) à une extrémité arrière, **caractérisé en ce qu'**il présente au moins une conduite (19, 19') à l'intérieur de la chambre (14) allant de l'extrémité arrière de celle-ci pour l'essentiel sur toute sa longueur jusqu'à une extrémité antérieure opposée et revenant dans l'autre sens en vue de conduire un liquide de chauffage ou de refroidissement, ladite conduite étant posée au niveau de la face inférieure d'une couverture (4) du boîtier (2), dont la face supérieure forme la surface de recouvrement (6) et est couplée thermiquement avec la surface de recouvrement (6).

2. Elément de refroidissement selon la revendication 1, **caractérisé en ce que** la conduite (19, 19') au nombre minimum d'une est agencée pour l'essentiel aux bords latéraux de la couverture (4).

3. Elément de refroidissement selon la revendication 1 ou 2, **caractérisé en ce qu'**il présente deux conduites (19, 19'), qui évoluent de préférence pour l'essentiel parallèlement.

4. Elément de refroidissement selon l'une quelconque des revendications 1 à 3, **caractérisé en ce qu'**il présente pour l'essentiel des sorties d'air (13) réparties sur toute la longueur de la surface de recouvrement (6) et reliées avec l'intérieur de la chambre (14).

5. Elément de refroidissement selon la revendication 4, **caractérisé en ce que** les sorties d'air (13) sont agencées pour l'essentiel le long d'une ligne médiane de la surface de recouvrement (6).

6. Elément de refroidissement selon la revendication 5, **caractérisé en ce que** les sorties d'air (13) se succèdent à intervalles réguliers compris de préférence entre 10 mm et 20 mm.

7. Elément de refroidissement selon l'une quelconque des revendications 4 à 6, **caractérisé en ce que** les sorties d'air (13) sont réalisées sous forme de trous ronds, de préférence avec un diamètre compris entre 2 mm et 3 mm.

8. Elément de refroidissement selon l'une quelconque des revendications 1 à 7, **caractérisé en ce qu'**il comprend une préchambre (15) agencée à l'intérieur de la chambre (14), s'étendant pour l'essentiel sur toute la longueur de celle-ci, ladite préchambre étant reliée par des orifices de liaison répartis pour l'essentiel sur toute sa longueur avec la partie externe restante de la chambre (14) et à l'extrémité arrière de laquelle débouche la prise d'air (17).

9. Elément de refroidissement selon l'une quelconque des revendications 1 à 7 et selon la revendication 8,
**caractérisé en ce que** les orifices de liaison sont placés pour l'essentiel au niveau d'une face supérieure de la préchambre (15) en face et distante de la couverture (4).

10. Elément de refroidissement selon la revendication 8 ou 9, **caractérisé en ce que** les orifices de liaison présentent une largeur de 2 mm maximum, de préférence de 1,5 mm maximum.

11. Elément de refroidissement selon la revendication 10, **caractérisé en ce que** les orifices de liaison sont réalisés sous forme de fentes (18) évoluant dans le sens transversal.

12. Elément de refroidissement selon l'une quelconque des revendications 8 à 11, **caractérisé en ce que** les orifices de liaison se succèdent dans le sens de la longueur, de préférence avec un intervalle compris entre 5 cm et 15 cm.

13. Elément de refroidissement selon l'une quelconque des revendications 8 à 12, **caractérisé en ce que** la préchambre (15) présente une section transversale pour l'essentiel rectangulaire.

14. Elément de refroidissement selon l'une quelconque des revendications 1 à 13, **caractérisé en ce que** le boîtier (2) comprend des deux côtés des parties latérales contiguës à la couverture (4), auxquelles est fixée la paroi perméable à l'air (10).

15. Elément de refroidissement selon la revendication 14, **caractérisé en ce que** la paroi perméable à l'air (10) est pour l'essentiel horizontale et les parties latérales présentent des baguettes d'encadrement (8a, 8b), lesquelles sont contiguës sous forme de cadre des deux côtés à la paroi perméable à l'air (10).

16. Elément de refroidissement selon la revendication 14 ou 15, **caractérisé en ce que** les parties latérales comportent des entretoises (9a, 9b) en saillie vers le haut, évoluant dans le sens de la longueur et la paroi perméable à l'air (10) présente au niveau d'au moins un bord latéral un profil de crochet (12a, 12b) concave vers le bas, évoluant également dans le sens de la longueur, lequel chevauche les bords supérieurs d'une des entretoises (9a, 9b).

17. Elément de refroidissement selon l'une quelconque des revendications 1 à 16, **caractérisé en ce que** le boîtier (2) ou chacune des multiples sections de boîtier (2a, 2b, 2c) se succédant dans le sens de la longueur forme une pièce pliée monobloc en tôle.

18. Elément de refroidissement selon l'une quelconque des revendications 1 à 17, **caractérisé en ce qu'**il est pour l'essentiel de forme parallélépipède rectangle.

19. Elément de refroidissement selon l'une quelconque des revendications 1 à 18, **caractérisé en ce que** la paroi perméable à l'air (10) est réalisée sous la forme d'une paroi de refroidissement avec des microperforations réparties sur sa surface, qui présentent un diamètre ne mesurant pas plus de 0,8 mm, de préférence pas plus de 0,6 mm.

20. Elément de refroidissement selon la revendication 19, **caractérisé en ce que** la paroi de refroidissement est constituée de tôle, laquelle est ajourée par les microperforations.

21. Elément de refroidissement selon l'une quelconque des revendications 1 à 18, **caractérisé en ce que** la paroi perméable à l'air (10) est réalisée pour l'essentiel sous la forme d'une tôle perforée recouverte d'un non-tissé.

22. Dispositif de refroidissement comportant un élément de refroidissement (1) selon l'une quelconque des revendications 1 à 21 ainsi qu'un plafond de la pièce (5), sur la face inférieure duquel est fixé l'élément de refroidissement (1) de telle manière que la surface de recouvrement (6) présente un écartement compris entre 2 mm et 10 mm par rapport à la face inférieure du plafond de la pièce (5).

23. Procédé d'opération d'un dispositif de refroidissement selon la revendication 22, **caractérisé en ce que** pendant les heures de travail, de l'air avec un taux d'air (L), qui est compris entre un taux minimal (Lₘᵢₙ) et un taux normal (Lₙ), est introduit à chaque fois dans l'élément de refroidissement (1) et à chaque fois que la température de la pièce (Tᵢ) s'élève au-dessus d'une température de travail maximale (Tₘₐₓ), du liquide de refroidissement est amené par la conduite (19) au nombre minimum d'une.

24. Procédé selon la revendication 23, **caractérisé en ce que** le taux de liquide de refroidissement (K) est une fonction croissante de la température de la pièce (Tᵢ) dans un intervalle se trouvant immédiatement au-dessus de la température de travail maximale (Tₘₐₓ).

25. Procédé selon la revendication 23 ou 24, **caractérisé en ce que** pendant les heures de travail, le taux d'air (L) correspond au taux normal (Lₙ) dans le cas d'une température de la pièce (Tᵢ) qui correspond au moins à la température de travail minimale (Tₘᵢₙ), et à chaque fois que la température de la pièce (Tᵢ) passe au-dessous de la température de travail minimale (Tₘᵢₙ), il est abaissé au-dessous du taux normal (Lₙ).

26. Procédé selon la revendication 25, **caractérisé en ce que** le taux d'air (L) est une fonction décroissante de la température de la pièce (Tᵢ) dans un intervalle se trouvant immédiatement au-dessous de la température de travail minimale (Tₘᵢₙ).

27. Procédé selon l'une quelconque des revendications 23 à 26, **caractérisé en ce que** pendant les heures de travail, lorsque la température de la pièce (Tᵢ) baisse en dessous d'une température de travail minimale (Tₘᵢₙ), du thermofluide est amené par la conduite (19, 19') au nombre minimum d'une.

28. Procédé selon la revendication 27, **caractérisé en ce que** le taux de thermofluide (H) est une fonction décroissante de la température de la pièce (Tᵢ) dans un intervalle se trouvant immédiatement au-dessous de la température de travail minimale (Tₘᵢₙ).

29. Procédé d'opération d'un dispositif de refroidissement selon la revendication 22, **caractérisé en ce que** pendant un intervalle situé en dehors des heures de travail, du liquide de refroidissement ou du thermofluide est amené par la conduite (19, 19') au nombre minimum d'une.

30. Procédé selon la revendication 29, **caractérisé en ce que** la température et le taux du liquide sont choisis de telle manière que la température de la pièce (Tᵢ) correspond pour l'essentiel à la température de travail minimale (Tₘᵢₙ) à la fin de l'intervalle.

31. Procédé selon la revendication 29 ou 30, **caractérisé en ce que** pendant l'intervalle, aucun air de refroidissement n'est introduit dans l'élément de refroidissement (1).
